(19) Europäisches Patentamt
European Patent Office
Office européen des brevets

(11) **EP 3 854 616 B1**

(12) **EUROPÄISCHE PATENTSCHRIFT**

(45) Veröffentlichungstag und Bekanntmachung des Hinweises auf die Patenterteilung:
**12.06.2024  Patentblatt 2024/24**

(21) Anmeldenummer: **21150515.1**

(22) Anmeldetag: **07.01.2021**

(51) Internationale Patentklassifikation (IPC):
**B60K 1/02** (2006.01)  **B60K 17/28** (2006.01)
**B60K 25/06** (2006.01)  F16H 3/089 (2006.01)

(52) Gemeinsame Patentklassifikation (CPC):
**B60K 1/02; B60K 17/02; B60K 17/08; B60K 17/28;
B60K 25/06;** B60Y 2200/14; B60Y 2200/91;
F16H 3/089; F16H 2200/0004; F16H 2200/0021;
F16H 2200/0034

(54) **GETRIEBE MIT NEBENABTRIEB**

TRANSMISSION WITH PTO

TRANSMISSION À PRISE DE FORCE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **24.01.2020  DE 102020000449**

(43) Veröffentlichungstag der Anmeldung:
**28.07.2021  Patentblatt 2021/30**

(73) Patentinhaber: **MAN Truck & Bus SE
80995 München (DE)**

(72) Erfinder:
• **Müller, Tobias
80995 München (DE)**
• **Köhler, Michael
80995 München (DE)**
• **Zieglmaier, Wolfgang
80995 München (DE)**
• **Jöhl, Peter
85435 Erding (DE)**

(74) Vertreter: **v. Bezold & Partner Patentanwälte -
PartG mbB
Ridlerstraße 57
80339 München (DE)**

(56) Entgegenhaltungen:
**WO-A2-2018/156676      CN-A- 109 649 140
CN-U- 209 870 082       DE-A1- 3 216 760
DE-A1-102018 215 920    DE-A1-102019 218 239
FR-A1- 2 976 526**

**Beschreibung**

Das technische Gebiet, auf dass sich die in Anspruch 1 beanspruchte Erfindung bezieht, betrifft ein Getriebe mit einem Nebenabtrieb.

Elektrofahrzeuge mit ausschließlich elektrischem Fahrantrieb und zugehöriger Getriebekonstruktion sind im Stand der Technik in den unterschiedlichsten Ausführungsformen bekannt.

Ein Kraftfahrzeug kann von mehreren elektrischen Antriebseinheiten angetrieben werden. Beispielsweise offenbart die DE 199 32 118 C1 eine Mehrfach-Motoren-Antrieb, bei dem zwei Elektromotoren vorgesehen sind, die einem gemeinsamen Abtrieb mit zweistufigem Getriebe zugeordnet sind. Eine automatische Steuerung steuert einerseits die Lastverteilung zwischen den Motoren und andererseits das Getriebe, um einen optimalen Wirkungsgrad des Abtriebes zu gewährleisten.

Ein mit einem Elektromotor angetriebenes Kraftfahrzeug kann ein Zweiganggetriebe aufweisen. Beispielsweise offenbart die DE 10 2013 204 227 A1 einen Antriebsstrang für ein Fahrzeug mit einem elektrischen Antrieb, der über eine Antriebswelle mit zumindest einer ersten Übersetzungsstufe und einer zweiten Übersetzungsstufe koppelbar ist. Zumindest eine Schalteinrichtung zum Schalten der Übersetzungsstufen ist vorgesehen, wobei die Schalteinrichtung zum Ausführen von Lastschaltungen zumindest ein formschlüssiges Schaltelement und zumindest ein reibschlüssiges Schaltelement umfasst. Jede der Übersetzungsstufen ist mit dem formschlüssigen Schaltelement schaltbar. Zumindest eine der Übersetzungsstufen ist sowohl mit dem formschlüssigen Schaltelement als auch mit dem reibschlüssigen Schaltelement schaltbar.

Zum Aufbauen eines Getriebes für ein Kraftfahrzeug können Modulsysteme verwendet werden. Beispielsweise offenbart die DE 10 2016 002 592 A eine 1- oder 2-Gang-Getrietriebevorrichtung für ein Elektrofahrzeug mit modularem Aufbau. Die Getriebevorrichtung weist eine Getriebekonstruktion und einen elektrischen Fahrantrieb zum Antreiben des Fahrzeugs auf. Die Getriebekonstruktion ist als Getriebemodul ausgebildet und antriebsseitig direkt mit dem Fahrantrieb verbunden.

Das Dokument CN209870082U offenbart ein Getriebe, welches unter den Wortlaut des Oberbegriffs des Anspruchs 1 fällt.

Der Erfindung liegt die Aufgabe zu Grunde, eine alternative und/oder verbesserte Getriebetechnik zu schaffen.

Die Aufgabe wird gelöst durch die Merkmale des Anspruchs 1. Vorteilhafte Weiterbildungen sind in den abhängigen Ansprüchen und der Beschreibung angegeben.

Das in Anspruch 1 beanspruchte Getriebe kann ermöglichen, dass die Leistungen der beiden Antriebseinheiten zum Antreiben des Kraftfahrzeugs im Getriebe kombiniert werden können. Zusätzlich kann das Getriebe ermöglichen, dass die erste Antriebseinheit das Kraftfahrzeug über das erste Teilgetriebe antreibt und die zweie Antriebseinheit den Nebenabtrieb z. B. während der Fahrt oder im Stillstand des Kraftfahrzeugs drehzahl- und drehmomentunabhängig von der ersten Antriebseinheit antreibt. Der Nebenabtrieb kann beispielsweise auch während der Fahrt zugeschaltet werden. Der Nebenabtrieb kann bspw. auch unabhängig von einer Fahrzeuggeschwindigkeit angetrieben werden. Es kann auch möglich sein, dass beide Antriebseinheiten das Kraftfahrzeug antreiben und beide Antriebseinheiten oder nur die zweite Antriebseinheit zusätzlich den Nebenabtrieb antreibt.

Weitere Einzelheiten und Vorteile der Erfindung werden im Folgenden unter Bezug auf die beigefügten Zeichnungen beschrieben, wobei die Figuren 1-11 keine unter den Wortlaut des Anspruchs 1 fallenden Getriebe zeigen. Es zeigen:

Figur 1     eine schematische Ansicht eines beispielhaften Antriebsstrangs eines Kraftfahrzeugs;

Figur 2     eine schematische Ansicht eines beispielhaften Getriebes, das mit einer Antriebseinheit verbunden ist;

Figur 3     eine schematische Ansicht eines beispielhaften Grundmoduls eines modularen Getriebebaukastens;

Figur 4     eine schematische Ansicht eines weiteren beispielhaften Getriebes, das mit zwei Antriebseinheiten verbunden ist;

Figur 5     eine schematische Ansicht eines weiteren anderen beispielhaften Getriebes, das mit einer Antriebseinheit verbunden ist;

Figur 6     eine schematische Darstellung eines beispielhaften Modulbaukastens;

Figur 7     ein Diagramm, das beispielhafte Volllastkennlinien für elektrische Antriebseinheiten zeigt;

Figur 8     ein beispielhaftes Schaltdiagramm für ein beispielhaftes Getriebe und unter Teillast betriebenen elektrischen Antriebseinheiten;

Figur 9     ein weiteres beispielhaftes Schaltdiagramm für ein beispielhaftes Getriebe und unter Volllast betriebenen elektrischen Antriebseinheiten;

Figur 10     eine schematische Ansicht eines weiteren beispielhaften Antriebsstrangs eines Kraftfahrzeugs;

Figur 11    eine schematische Darstellung von Ausgangswellen des beispielhaften Antriebsstrangs von Figur 9 in einer Vertikalebene;

Figur 12    eine schematische Ansicht eines weiteren anderen beispielhaften Getriebes, das mit zwei Antriebseinheiten verbunden ist, in einer ersten Schaltstellung;

Figur 13    eine schematische Ansicht des weiteren anderen beispielhaften Getriebes von Figur 12 in einer zweiten Schaltstellung;

Figur 14    eine schematische Ansicht des weiteren anderen beispielhaften Getriebes von Figur 12 in einer dritten Schaltstellung;

Figur 15    eine schematische Ansicht des weiteren anderen beispielhaften Getriebes von Figur 12 in einer vierten Schaltstellung; und

Figur 16    eine schematische Ansicht eines weiteren anderen beispielhaften Getriebes, das mit zwei Antriebseinheiten verbunden ist.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

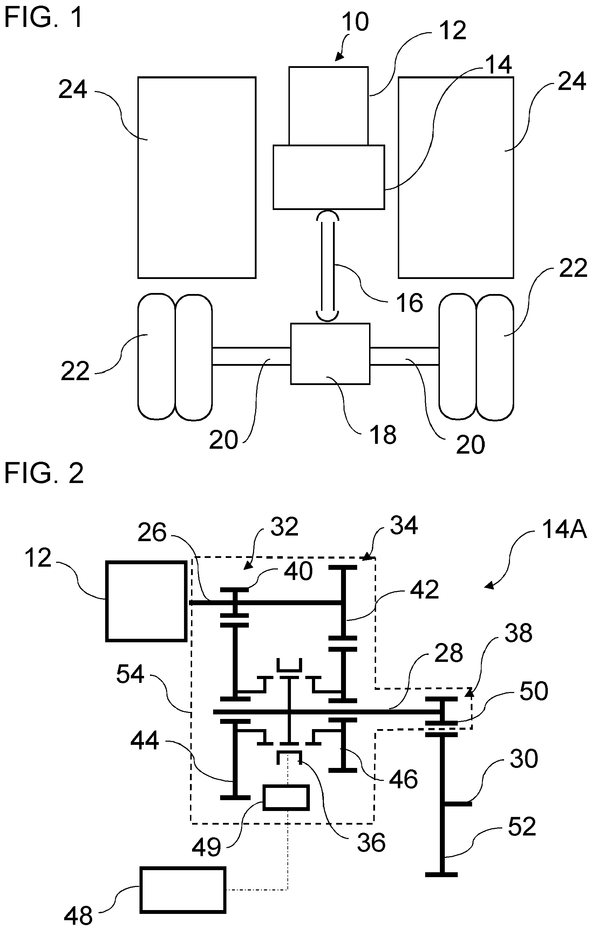

Figur 1 zeigt rein schematisch einen Antriebsstrang 10 eines Kraftfahrzeugs. Zweckmäßig kann das Kraftfahrzeug als ein Nutzfahrzeug, insbesondere als ein Lastkraftwagen oder ein Omnibus, ausgeführt sein.

Der Antriebsstrang 10 weist eine Antriebseinheit 12, ein Getriebe 14, eine Gelenkwelle 16, ein Achsgetriebe 18, Radwellen 20 und Räder 22 auf.

Die Antriebseinheit 12 ist besonders bevorzugt als eine elektrische Antriebseinheit ausgeführt. Die Antriebseinheit 12 ist zweckmäßig als eine hochdrehende elektrische Antriebseinheit ausgeführt. Beispielsweise kann die elektrische Antriebseinheit 12 eine Grenzdrehzahl in einem Bereich zwischen 10000 U/min und 24000 U/min (oder mehr oder weniger) aufweisen. Die untere Grenze kann bspw. bei 2500 U/min liegen. Die Antriebseinheit 12 ist als ein Längsmotor angeordnet, das heißt längs der Fahrzeuglängsachse ausgerichtet bzw. mit einer Ausgangswelle im Wesentlichen parallel zur Fahrzeuglängsachse. Es ist möglich, dass mehr als eine Antriebseinheit 12 vorgesehen ist.

Das Getriebe 14 ist trieblich mit einer Ausgabewelle der Antriebseinheit 12 verbunden, vorzugsweise direkt. Ein Gehäuse des Getriebes 14 kann beispielsweise direkt an ein Gehäuse der Antriebseinheit 12 angeflanscht sein. Das Getriebe 14 kann beispielsweise in einem ersten Gang eine Übersetzung (i) in einem Bereich zwischen 2,5 und 10, vorzugsweise zwischen 3 und 7, aufweisen. In einem zweiten Gang kann eine Übersetzung zwischen 6 und 18, vorzugsweise zwischen 10 und 14, sein.

Die Gelenkwelle 16 verbindet eine Ausgangswelle des Getriebes 14 trieblich mit dem Achsgetriebe 18. Die Gelenkwelle 16 ist dazu ausgebildet, nichtfluchtende Drehachsen der Ausgangswelle des Getriebes 14 und eines Eingangselements des Achsgetriebes 18 miteinander zu verbinden. Beispielsweise kann die Gelenkwelle als eine Kardanwelle mit zwei Kreuzgelenken ausgeführt sein.

Das Achsgetriebe 18 verbindet die Gelenkwelle 16 trieblich mit den Radwellen 20. Das Achsgetriebe 18 kann beispielsweise eine Kegelradstufe und ein Differentialgetriebe aufweisen. Es ist auch möglich, dass das Achsgetriebe einen Durchtrieb zu einer weiteren angetriebenen Achse aufweist. Die Radwellen 20 treiben die Räder 22 an.

Das Kraftfahrzeug weist einen oder mehrere Traktionsenergiespeicher 24 auf. Die Traktionsenergiespeicher 24 können elektrische Energie zum Antreiben der elektrischen Antriebseinheit(en) 12 bereitstellen. Beispielsweise können die Traktionsenergiespeicher 24 über eine Leistungselektronik (nicht dargestellt) elektrisch mit der elektrischen Antriebseinheit 12 verbunden sein. Die in Figur 1 gezeigte, bauraumgünstige Anordnung weist zwei Traktionsenergiespeicher 24 auf, die auf entgegengesetzten Längsseiten des Antriebsstrangs 10 angeordnet sind.

Die Figur 2 zeigt ein Ausführungsbeispiel für das Getriebe 14 von Figur 1, das zum Abgrenzen von anderen Ausführungsbeispielen mit dem Bezugszeichen 14A versehen ist.

Das Getriebe 14A ist als ein beispielsweise nicht-lastschaltbares Zweiganggetriebe ausgeführt. Das Getriebe 14A weist eine Eingangswelle 26, eine Zwischenwelle 28 und eine Ausgangswelle 30 auf. Das Getriebe 14A weist zudem eine erste Übersetzungsstufe 32, eine zweite Übersetzungsstufe 34, eine Schalteinheit 36 und eine dritte Übersetzungsstufe 38 auf.

Die Eingangswelle 26 ist trieblich mit der Antriebseinheit 12 verbunden. Vorzugsweise ist die Eingangswelle 26 direkt trieblich mit einer Ausgangswelle der Antriebseinheit 12 verbunden.

Die erste Übersetzungsstufe 32 und die zweite Übersetzungsstufe 34 können die Eingangswelle 26 trieblich mit der Zwischenwelle 28 verbinden. Die Übersetzungsstufen 32 und 34 weisen jeweils ein beispielhaft als Festrad ausgeführtes Antriebsrad 40, 42 und ein beispielhaft als Losrad ausgeführtes Abtriebsrad 44, 46 auf. Das Antriebsrad 40 bzw. 42 kämmt mit dem Abtriebsrad 44 bzw. 46. Die Antriebsräder 40, 42 sind nebeneinander auf der Eingangswelle 26 angeordnet. Die als Festräder ausgeführten Antriebsräder 40, 42 sind drehfest auf der Eingangswelle 26 angeordnet. Die Abtriebsräder 44, 46 sind nebeneinander auf der Zwischenwelle 28 angeordnet. Die als Losräder ausgeführten Abtriebsräder 44, 46 sind drehbar auf der Zwischenwelle 28 gelagert. Die Übersetzungsstufen 32 und 34 sind bevorzugt als Stirnradstufen mit jeweils zwei Stirn(-zahn-)rädern ausgeführt.

Die Schalteinheit 36 kann die Abtriebsräder 44, 46 drehfest und damit trieblich mit der Zwischenwelle 28 verbinden. In einer ersten Schaltstellung (erster Gang) verbindet die Schalteinheit 36 das Abtriebsrad 44 trieblich mit der Zwischenwelle 28. In einer zweiten Schaltstellung (zweiter Gang) verbindet die Schalteinheit 36 das Abtriebsrad 46 trieblich mit der Zwischenwelle 28. In einer dritten Schaltstellung (Neutralstellung), wie dargestellt in Figur 2, verbindet die Schalteinheit 36 keines der Abtriebsräder 44, 46 trieblich mit der Zwischenwelle 28. Vorzugsweise kann die Schalteinheit 36 als formschlüssige Schalteinheit ausgeführt sein, insbesondere als eine reine Klauenkupplung. Es ist allerdings auch möglich, dass die Schalteinheit 36 beispielsweise als eine reibschlüssige Schalteinheit ausgeführt ist. Eine Betätigung der Schalteinheit 36 kann von einer Steuereinheit 48, die insbesondere als eine Getriebesteuereinheit ausgeführt ist, gesteuert sein. Die Steuereinheit 48 kann dazu einen Aktuator 49, der zum Bewegen der Schalteinheit 36 ausgeführt ist, entsprechend ansteuern. Der Aktuator 49 kann bspw. als ein pneumatischer Aktuator oder ein elektromechanischer Aktuator ausgeführt sein. Die Steuereinheit 48 kann beispielsweise auch einen Betrieb der Antriebseinheit(en) 12 steuern.

Die dritte Übersetzungsstufe 38 verbindet die Zwischenwelle 28 trieblich mit der Ausgangswelle 30. Ein als Festrad ausgeführtes Antriebsrad 50 der dritten Übersetzungsstufe 38 ist drehfest auf der Zwischenwelle 28 angeordnet. Ein als Festrad ausgeführtes Abtriebsrad 52 der dritten Übersetzungsstufe 38 ist drehfest auf der Ausgangswelle 30 angeordnet. Die Räder 50 und 52 kämmen miteinander. Zweckmäßig ist die dritte Übersetzungsstufe 38 ebenfalls als eine Stirnradstufe mit zwei Stirnrädern ausgeführt. Die Ausgangswelle 30 ist vorzugsweise trieblich direkt mit der Gelenkwelle 16 (siehe Figur 1) verbunden.

Vorzugsweise weist die erste Übersetzungsstufe 32 eine Übersetzung (i) in einem Bereich zwischen 2,5 und 4,5 auf. Die zweite Übersetzungsstufe 34 weist bevorzugt eine Übersetzung (i) in einem Bereich zwischen 1 und 2,5 auf. Die dritte Übersetzungsstufe 38 weist vorzugsweise eine Übersetzung in einem Bereich zwischen 2,5 und 4 auf. Folglich wird erst am Ende des Getriebes 14A ein hohes Moment erzeugt. Ein geringer Bauraumbedarf wird dadurch begünstigt.

Zweckmäßig weist das Getriebe 14A neben den Übersetzungsstufe 32, 34 und 38 keine weitere Übersetzungsstufe und neben der Schalteinheit 36 keine weitere Schalteinheit auf. Das Getriebe 14A kann somit besonders kleinbauend, einfach und kostengünstig bzgl. Entwicklung und Herstellung sein.

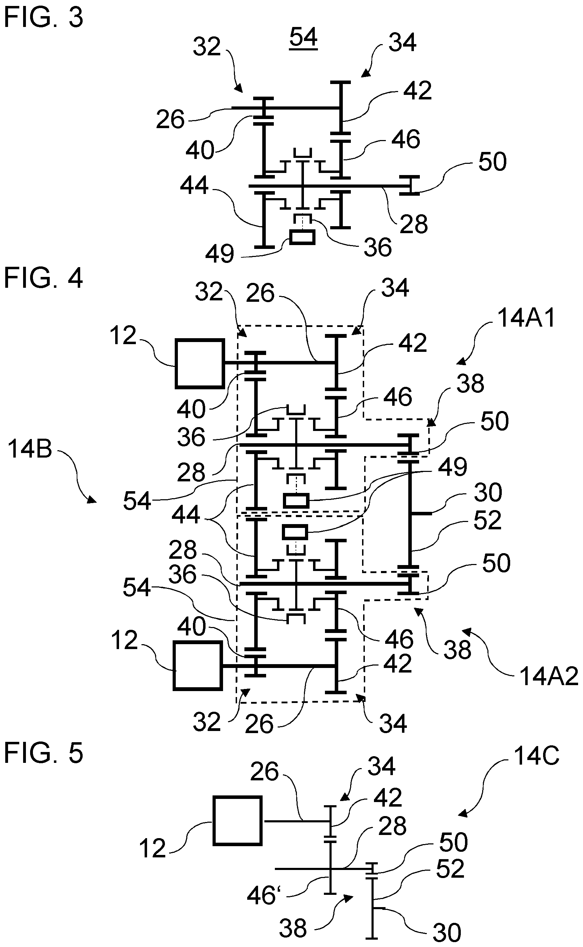

Es ist möglich, dass das Getriebe 14A aus einem modularen Getriebebaukasten abgeleitet ist. Der modulare Getriebebaukasten kann den Aufbau unterschiedlicher Getriebe mit einer großen Anzahl an Gleichteilen ermöglichen, um insbesondere Kosten zu sparen. Vorzugsweise kann der modulare Getriebebaukasten den Aufbau einiger oder aller von dem Getriebe 14A von Figur 2 und den Getrieben 14B-14E von den Figuren 4, 5 und 12 bis 16 ermöglichen.

Die Figur 3 zeigt ein Grundmodul 54, das von dem modularen Getriebebaukasten bevorzugt verwendet werden kann. Aus dem Grundmodul 54 lassen sich eine Vielzahl von unterschiedlichen Getrieben ableiten, insbesondere durch Mehrfachverwendung des Grundmoduls 54.

Das Grundmodul 54 kann besonders bevorzugt die bereits unter Bezugnahme auf die Figur 2 beschriebene Eingangswelle 26, Zwischenwelle 28, erste Übersetzungsstufe 32, zweite Übersetzungsstufe 34, Schalteinheit 36, den Aktuator 49 und optional das Antriebsrad 50 aufweisen. Das Grundmodul 54 kann ferner die Lager und/oder Dichtungen der Eingangswelle 26 und/oder der Zwischenwelle 28 aufweisen. Das Grundmodul 54 kann zusätzliche oder alternative Komponenten aufweisen. Insbesondere kann das Grundmodul 54 nur die erste Übersetzungsstufe 32, die zweite Übersetzungsstufe 34 und die Schalteinheit 36 aufweisen. Die Schalteinheit 36 kann beispielsweise im Bereich der Abtriebsräder der Übersetzungsstufen 32, 34 angeordnet sein, wie dargestellt ist. Alternativ kann die Schalteinheit 36 beispielsweise im Bereich der Antriebsräder der Übersetzungsstufen 32, 34 angeordnet sein (nicht dargestellt).

Es wird darauf hingewiesen, dass das Grundmodul 54 aus den genannten Komponenten gebildet werden kann, wobei der Achsenabstand zwischen der Eingangswelle 26 und der Zwischenwelle 28 bei jedem Grundmodul 54 gleich ist. Es ist allerdings möglich, dass bspw. aus Packagegründen eine Anpassung der räumlichen Anordnung zwischen der Eingangswelle 26 und der Zwischenwelle 28 bei Verwendung des Grundmoduls 54 vorgenommen wird. Eine Ebene, in der die Eingangswelle 26 und die Zwischenwelle verläuft, kann beim Verbauen des Grundmoduls 54 in unterschiedlichen Getrieben unterschiedlich sein, wobei der Achsabstand zwischen den Wellen 26, 28 gehalten wird.

Unter erneuter Bezugnahme auf die Figur 2 ist dargestellt, wie das Getriebe 14A aus dem Grundmodul 54 (dargestellt in gestrichelten Linien) abgeleitet werden kann. Das Getriebe 14A kann das Grundmodul 54 einmal verwenden und um das Abtriebsrad 52 und die Ausgangswelle 30 ergänzen, die bspw. anforderungsspezifisch angepasst sein können, um das Getriebe 14A zu schaffen.

Die Figur 4 zeigt ein weiteres Ausführungsbeispiel für das Getriebe 14 von Figur 1, das zum Abgrenzen von anderen Ausführungsbeispielen mit dem Bezugszeichen 14B versehen ist.

Das Getriebe 14B ist als ein lastschaltbares Zweiganggetriebe ausgeführt. Das Getriebe 14B ist von zwei Antriebseinheiten 12 antreibbar. Das Getriebe 14B weist ein erstes Teilgetriebe 14A1 und ein zweites Teilgetriebe 14A2 auf. Die Teilgetriebe 14A1 und 14A2 können jeweils im Wesentlichen wie das Getriebe 14A von Figur 2 aufgebaut sein. Beide Teilgetriebe 14A1, 14A2 können sich eine gemeinsame Ausgangswelle 30 teilen.

Beide Teilgetriebe 14A1, 14A2 sind mit einer eigenen Antriebseinheit 12 trieblich verbunden. Die beiden Abtriebsräder 44 der Teilgetriebe 14A1, 14A2 kämmen nicht miteinander. Die Teilgetriebe 14A1, 14A2 sind parallelgeschaltet. Das Getriebe 14B ist als ein Summiergetriebe aus den beiden Teilgetrieben 14A1, 14A2 gebildet. Die Teilgetriebe 14A1, 14A2 sind abtriebsseitig an der Ausgangswelle 30 trieblich miteinander gekoppelt. Die Ausgangswelle 30 kann trieblich mit der Gelenkwelle 16 (siehe Figur 1) verbunden werden. Die Summation der Leistung erfolgt durch die dritten Übersetzungsstufen 38, an dem die Antriebsräder 50 beider Teilgetriebe 14A1, 14A2 mit demselben Abtriebsrad 52 kämmen. Je nach Anforderung kann das Getriebe 14B von nur einer oder von beiden der Antriebseinheiten 12 angetrieben werden. Die Schalteinheiten 36 können unabhängig voneinander schalten, z. B. gesteuert durch eine Steuereinheit (nicht gesondert dargestellt).

Wie erwähnt, kann das Getriebe 14B von Figur 4 aus dem gleichen modularen Getriebebaukasten abgeleitet werden wie das Getriebe 14A von Figur 2. Dadurch können viele Gleichteilkomponenten verwendet werden.

Besonders bevorzugt verwendet das Getriebe 14B wieder das Grundmodul 54 (siehe Figur 3). Das Grundmodul 54 kann zweifach/doppelt im Getriebe 14B bzw. jeweils einmal in jedem Teilgetriebe 14A1, 14A2 des Getriebes 14B verwendet werden. Die beiden Grundmodule 54 können beispielsweise um das Abtriebsrad 52 und die Ausgangswelle 30 ergänzt werden, die bspw. anforderungsspezifisch angepasst sein können.

Es ist möglich, dass nicht alle Komponenten des Grundmoduls 54 als Gleichteilkomponenten in den Getrieben 14A und 14B verwendet werden, wobei eine im Wesentliche gleiche Ausbildung bevorzugt ist. Beispielweise können zwischen den Verzahnungen der dritten Übersetzungsstufen 38 bei den Getrieben 14A und 14B Mikrounterschiede bei gleicher Zähnezahl bestehen, um jeweils einen optimalen Eingriff des Antriebsrads 50 mit dem Abtriebsrad 52 bei dem Getriebe 14A und der beiden Antriebsräder 50 mit dem Abtriebsrad 52 bei dem Getriebe 14B zu gewährleisten. Weitere Unterschiede zwischen den Getrieben 14A und 14B (bzw. den Teilgetrieben 14A1, 14A2) können beispielsweise in jeweils angepassten Getriebegehäusen liegen.

Zusätzlich ist es möglich, dass das Grundmodul nicht nur zweifach, sondern häufiger miteinander in einem entsprechenden Summiergetriebe miteinander kombiniert werden kann, z. B dreifach oder vierfach. So kann bspw. ein Summiergetriebe aus drei oder mehr Grundmodulen aufgebaut werden, die jeweils von einer eigenen Antriebseinheit (insgesamt drei oder mehr Antriebseinheiten) angetrieben werden und abtriebsseitig miteinander verbunden sind.

Da sich die Belastung innerhalb des Grundmoduls auch bei mehrfacher Verwendung nicht ändert, muss dessen Auslegung und Dimensionierung auch bei Mehrfachverwendung nicht angepasst werden. Hierdurch ist eine sehr kosteneffiziente Abdeckung eines breiten Getriebe- und Antriebsstrangportfolios möglich.

Die Figur 5 zeigt ein weiteres Ausführungsbeispiel für das Getriebe 14 von Figur 1, das zum Abgrenzen von anderen Ausführungsbeispielen mit dem Bezugszeichen 14c versehen ist.

Das Getriebe 14C ist als ein Einganggetriebe mit konstanter Übersetzung ausgeführt. Das Getriebe 14C ist von einer Antriebseinheit 12 antreibbar.

Das Getriebe 14C kann ebenfalls aus dem Grundmodul 54 des modularen Getriebebaukastens abgeleitet werden, insbesondere durch Weglassen der ersten Übersetzungsstufe 32, Weglassen der Schalteinheit 36, Änderung des Losrads 46 (siehe Figur 3) in ein Festrad 46' und Ergänzung eines Abtriebsrads 52 und einer Ausgangswelle 30. Die Ausgangswelle 30 kann trieblich mit der Gelenkwelle 16 (siehe Figur 1) verbunden sein. Es ist möglich, dass das Getriebe 14C z. B. aus Packagegründen angepasste (kürzere) Wellen 26, 28 aufweist als das Grundmodul 54. Als Gleichteilkomponenten mit den Getrieben 14A und 14B kommen somit insbesondere das Antriebsrad 42 und das Antriebsrad 50 sowie die Lager und Dichtungen in der Wellen 26 und 28 in Betracht.

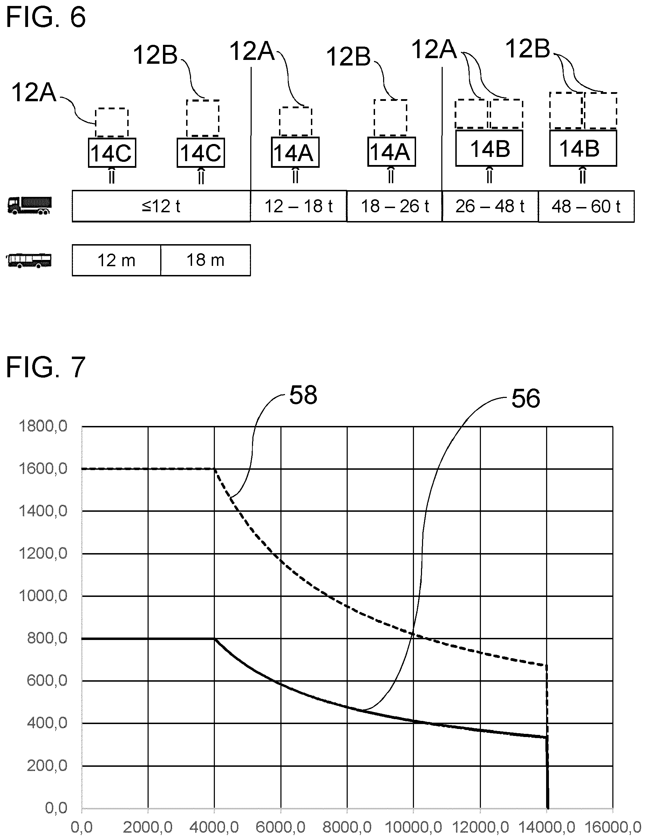

Die Figur 6 zeigt rein beispielhaft, wie mittels des beschriebenen modularen Getriebebaukastens der Aufbau eines breiten Antriebsstrangportfolios für unterschiedliche Anwendungen im Nutzfahrzeugbereich möglich ist.

Der modulare Antriebsstrangbaukasten kann zwei unterschiedliche, vorzugsweise elektrische, Antriebseinheiten 12A und 12B mit unterschiedlicher maximaler Leistungsausgabe aufweisen. Beispielsweise kann die Antriebseinheit 12B eine höhere Leistung als die Antriebseinheit 12A aufweisen. Der modulare Antriebsstrangbaukasten kann zudem den zuvor beschriebenen modularen Getriebebaukasten verwenden.

Lastkraftwagen bis beispielsweise 12 t können das (Eingang-)Getriebe 14C (siehe Figur 5) verwenden und je nach Anforderung die schwächere Antriebseinheit 12A oder die stärkere Antriebseinheit 12B. Ebenso können Omnibusse bis beispielsweise 12 Meter oder bis beispielsweise 18 Meter diese Antriebsstrangkonfigurationen verwenden. Es ist möglich, dass Omnibusse bis beispielsweise 18 Meter zwei Antriebsstränge gemäß der Antriebsstrangkonfiguration aufweisen.

Lastkraftwagen zwischen beispielsweise 12 t und 18 t können das (Zweigang-)Getriebe 14A (siehe Figur 2) und die Antriebseinheit 12A mit geringerer Leistung verwenden. Lastkraftwagen zwischen beispielsweise 18 t und 26 t können das (Zweigang-)Getriebe 14A (siehe Figur 2) und die stärkere Antriebseinheit 12B verwenden.

Lastkraftwagen zwischen beispielsweise 26 t und 48 t können das (Zweigang-)Getriebe 14B (siehe Figur 4) und zwei der schwächeren Antriebseinheiten 12A verwenden. Lastkraftwagen zwischen beispielsweise 48 t und 60 t können das (Zweigang-)Getriebe 14B (siehe Figur 4) und zwei der stärkeren Antriebseinheiten 12A verwenden.

Die modulare Konzeption des Antriebsstrangs und des Getriebes erlaubt es somit, eine gesamte Flotte von batterieelektrischen Nutzfahrzeugen auf einfache und kosteneffiziente Weise aufzubauen. Die Verwendung von jeweils zwei Antriebseinheiten 12A oder 12B bei den schweren Lastkraftwagen zwischen beispielsweise 26 t und 60 t kann auch aus Kostengründen sinnvoll sein, da die Verwendung einer einzigen großen Antriebseinheit überproportional teuer sein kann und sich bei Verwendung von jeweils zwei Antriebseinheiten größere Stückzahlen und somit größere Skaleneffekte erzielen lassen. Die gesamte Flotte kann lediglich zwei verschiedene Typen von Antriebseinheiten verwenden (siehe Figur 6).

Nachfolgend ist unter Bezugnahme auf die Figuren 4 und 7 bis 9 erläutert, wie die Lastschaltbarkeit zwischen den Gängen des Getriebes 14B erreicht werden kann.

Die Figur 7 zeigt ein Diagramm mit zwei beispielhaften Volllastkennlinien 56, 58. Eine Drehzahl der Antriebseinheiten ist auf der Abszisse (x-Achse) in U/min aufgetragen. Ein bereitgestelltes Drehmoment ist in Nm auf der Ordinate (Y-Achse) aufgetragen. Die Zahlenwerte auf den Achsen sind als rein beispielhaft anzusehen.

Die durchgezogene Volllastkennlinie 56 gibt ein dauerhaft fahrbares Volllastmoment für eine der Antriebseinheiten 12 an. Die Volllastkennlinie 58 gibt ein dauerhaft fahrbares Volllastmoment für beide Antriebseinheiten 12 an. Die gestrichelte Volllastkennlinie 58 ergibt sich aus einer Summation zweier Volllastkennlinien 56.

Schaltvorgänge des Getriebes 14B lassen sich grundsätzlich in zwei unterschiedliche Ausgangssituationen differenzieren.

Im ersten Fall kann ohne Zugkraftunterbrechung oder Zugkraftreduzierung geschaltet werden, da die vor und nach dem Schalten erforderliche Antriebsleistung, die z. B. von beiden Antriebseinheiten 12 aufbringbar ist, während des Schaltens (zumindest kurzzeitig) durch nur eine der beiden Antriebseinheiten 12 alleine bereitgestellt werden kann. Dies kann bezogen auf das Diagramm der Figur 7 beispielsweise der Fall sein, wenn ein Antriebsmoment erforderlich ist, das unterhalb oder auf der Kurve 56 liegt.

Im zweiten Fall kann nur mit einer Zugkraftreduzierung geschaltet werden, da die vor und nach dem Schalten erforderliche Antriebsleistung, die z. B. von beiden Antriebseinheiten 12 aufbringbar ist, während des Schaltens nicht durch nur eine der beiden Antriebseinheiten 12 alleine bereitgestellt werden kann. Dies kann bezogen auf das Diagramm der Figur 7 beispielsweise der Fall sein, wenn ein Antriebsmoment erforderlich ist, das zwischen den Kurven 58 und 56 liegt.

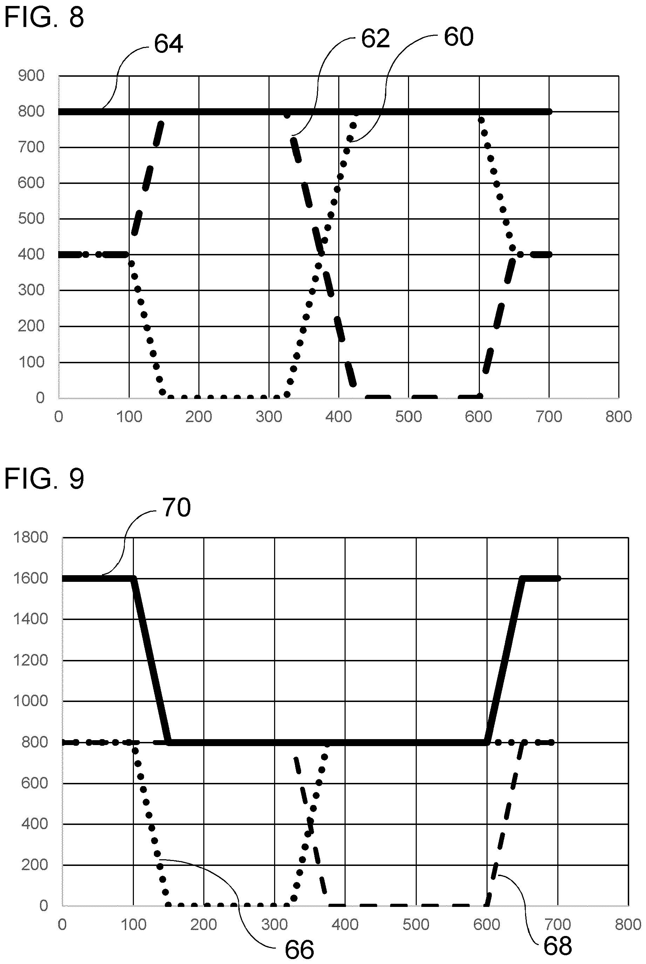

Die Figur 8 zeigt einen Schaltverlauf für den ersten Fall unter der Annahme, dass die Fahrzeuggeschwindigkeit während des Schaltvorgangs konstant bleibt. Die Leistungsanpassung erfolgt über das Antriebsmoment. Die Figur 8 zeigt ein Antriebsmomentenverlauf in Nm (y-Achse) aufgetragen über die Zeit in ms (X-Achse). Die Zahlenwerte auf den Achsen sind als rein beispielhaft anzusehen.

Die gepunktete Kurve 60 gibt ein Antriebsmoment der mit dem ersten Teilgetriebe 14A1 verbundenen Antriebseinheit 12 (z. B. die obere Antriebseinheit 12 in Figur 4) an. Die gestrichelte Kurve 62 gibt ein Antriebsmoment der mit dem zweiten Teilgetriebe 14A2 verbundenen Antriebseinheit 12 (z. B. die untere Antriebseinheit 12 in Figur 4) an. Die durchgezogene Kurve 64 wiederum gibt ein aus den Kurven 60 und 62 aufsummiertes Antriebsmoment an.

Vor dem Schaltvorgang verbinden beide Schalteinheiten 36 jeweils das als Losrad ausgeführte Abtriebsrad 44 trieblich mit der Zwischenwelle 28, und die Schalteinheiten 36 sollen jeweils auf das Abtriebsrad 46 umgeschaltet werden (oder umgekehrt). Die Schalteinheiten 36 können zweckmäßig nur im Wesentlichen lastfrei schalten. Um den Schaltvorgang zu initialisieren, beginnt die mit dem ersten Teilgetriebe 14A1 verbundene Antriebseinheit 12 zum Zeitpunkt 100 ms das Antriebsmoment zu reduzieren (siehe Kurve 60). Das Antriebsmoment kann bis auf annähernd null reduziert werden (ungefähr bei 150 ms). Gleichzeitig erhöht die mit dem zweiten Teilgetriebe 14A2 verbundene Antriebseinheit 12 ihr Antriebsmoment synchron (Kurve 62). Die Antriebsmomentreduzierung wird durch die Antriebsmomenterhöhung vollständig kompensiert. Das resultierende Antriebsmoment bleibt konstant (Kurve 64).

Sobald das Antriebsmoment der mit dem erstem Teilgetriebe 14A1 verbundenen Antriebseinheit 12 annähernd null ist (bei ca. 150 ms), beginnt die Schalteinheit 36 des ersten Teilgetriebes 14A1 zu schalten (zwischen 150 ms und 330 ms), und zwar von Abtriebsrad 44 zu Abtriebsrad 46. Die Schaltung kann im Westlichen lastfrei erfolgen. Während des Schaltens bleibt das resultierende Antriebsmoment konstant (Kurve 64), da es alleine von der Antriebseinheit 12 des zweiten Teilgetriebes 14A2 bereitgestellt werden kann.

Nach dem Schalten der Schalteinheit 36 des ersten Teilgetriebes 14A1 wird das Antriebsmoment der mit dem ersten Teilgetriebe 14A1 verbundenen Antriebseinheit 12 erhöht (Kurve 60). Das Antriebsmoment der mit dem zweiten Teilgetriebe 14A2 verbunden Antriebseinheit 12 wird gleichzeitig bis auf annähernd null reduziert (Kurve 62). Nun kann die Schalteinheit 36 des zweiten Teilgetriebes 14A2 schalten (bei ca. 420 ms), und zwar ebenfalls von Abtriebsrad 44 zu Abtriebsrad 46. Während des Schaltens bleibt das resultierende Antriebsmoment wieder konstant (Kurve 64), da es alleine von der Antriebseinheit 12 des ersten Teilgetriebes 14A1 bereitgestellt werden kann.

Nach dem Schalten der Schalteinheit 36 des zweiten Teilgetriebes 14A2 können die Antriebsmomente der beiden Antriebseinheiten 12 wieder aneinander angeglichen werden.

Die beiden Schalteinheiten 36 werden somit zeitverzögert nacheinander betätigt. Zwischen den Schaltvorgängen der beiden Schalteinheiten 36 werden die Antriebsmomente der Antriebseinheiten 12 wie erläutert angepasst.

Es ist möglich, dass zum Beginn oder zum Ende des Schaltvorgangs nicht beide Antriebseinheiten 12 das gleiche Antriebsmoment bereitstellen. Es kann beispielsweise auch eine der beiden Antriebseinheiten 12 gar kein Antriebsmoment bereitstellen.

Es ist auch möglich, dass die Antriebsmomenterhöhung der jeweils aktiven Antriebseinheit 12 während des Schaltvorgangs auf eine maximale Dauerleistung / Volllast nicht ausreicht, um die Antriebsmomentverringerung der anderen Antriebseinheit 12 vollständig zu kompensieren. In diesem Fall kann jedoch zumindest eine Zugkraftunterbrechung verhindert und eine Zugkraftverringerung während des Schaltvorgangs deutlich verringert werden.

Die Figur 9 zeigt einen Schaltverlauf für den zweiten Fall (nur mit Zugkraftreduzierung schaltbar). Die Figur 9 zeigt wieder ein Antriebsmomentenverlauf in Nm (y-Achse) aufgetragen über die Zeit in ms (x-Achse). Die Zahlenwerte auf den Achsen sind als rein beispielhaft anzusehen.

Die gepunktete Kurve 66 gibt ein Antriebsmoment der mit dem ersten Teilgetriebe 14A1 verbundenen Antriebseinheit 12 an. Die gestrichelte Kurve 68 gibt ein Antriebsmoment der mit dem zweiten Teilgetriebe 14A2 verbundenen Antriebseinheit 12 an. Die durchgezogene Kurve 70 wiederum gibt ein aus den Kurven 66 und 68 aufsummiertes Antriebsmoment an.

Vor dem Schaltvorgang verbinden beide Schalteinheiten 36 jeweils das Abtriebsrad 44 trieblich mit der Zwischenwelle 28, und die Schalteinheiten 36 sollen jeweils auf das Abtriebsrad 46 umgeschaltet werden (oder umgekehrt). Die Schalteinheiten 36 können zweckmäßig nur im Wesentlichen lastfrei schalten. Um den Schaltvorgang zu initialisieren, beginnt die mit dem ersten Teilgetriebe 14A1 verbundene Antriebseinheit 12 zum Zeitpunkt 100 ms das Antriebsmoment zu reduzieren (siehe Kurve 66). Das Antriebsmoment kann bis auf annähernd null reduziert werden (ungefähr bei 150 ms). Die mit dem zweiten Teilgetriebe 14A2 verbundene Antriebseinheit 12 erhöht ihr Antriebsmoment nicht (Kurve 68), da sie bereits unter Volllast betrieben wird. Die Antriebsmomentreduzierung wird nicht kompensiert. Das resultierende Antriebsmoment (Kurve 70) entspricht der mit dem zweiten Teilgetriebe 14A2 verbundenen Antriebseinheit 12 (Kurve 68). Es kommt zu einer Zugkraftverringerung.

Sobald das Antriebsmoment der mit dem ersten Teilgetriebe 14A1 verbundenen Antriebseinheit 12 annähernd null ist (bei ca. 150 ms), beginnt die Schalteinheit 36 des ersten Teilgetriebes 14A1 zu schalten (zwischen 150 ms und 330 ms), und zwar vom Abtriebsrad 44 zum Abtriebsrad 46. Die Schaltung kann im Westlichen lastfrei erfolgen. Während des Schaltens bleibt das resultierende Antriebsmoment konstant (Kurve 64), da es alleine von der Antriebseinheit 12 des zweiten Teilgetriebes 14A2 bereitgestellt wird.

Nach dem Schalten der Schalteinheit 36 des ersten Teilgetriebes 14A1 wird das Antriebsmoment der mit dem ersten Teilgetriebe 14A1 verbundenen Antriebseinheit 12 wieder bis auf Volllast erhöht (Kurve 66). Das Antriebsmoment der mit dem zweiten Teilgetriebe 14A2 verbunden Antriebseinheit 12 wird gleichzeitig bis auf annähernd null reduziert (Kurve 68). Nun kann die Schalteinheit 36 des zweiten Teilgetriebes 14A2 schalten (bei ca. 420 ms), und zwar auch vom Abtriebsrad 44 zum Abtriebsrad 46. Während des Schaltens bleibt das resultierende Antriebsmoment wieder konstant (Kurve 70), da es alleine von der Antriebseinheit 12 des ersten Teilgetriebes 14A1 bereitgestellt wird.

Nach dem Schalten der Schalteinheit 36 des zweiten Teilgetriebes 14A2 wird das Antriebsmoment der mit dem zweiten Teilgetriebe 14A2 verbundenen Antriebseinheit 12 wieder auf Volllast erhöht (Kurve 68). Das resultierende Antriebsmoment (Kurve 70) wird erhöht und entspricht dann wieder dem resultierenden Antriebsmoment vor dem gesamten Schaltvorgang.

Es ist möglich, dass die Zugkraftverringerung im Beispiel von Figur 8 während des Schaltens dadurch verringert oder sogar vollständig kompensiert wird, dass die jeweils aktive Antriebseinheit während des Schaltvorgangs kurzzeitig mit der jeweils verfügbaren Spitzenleistung anstelle der maximalen Dauerleistung (wie dargestellt) betrieben wird.

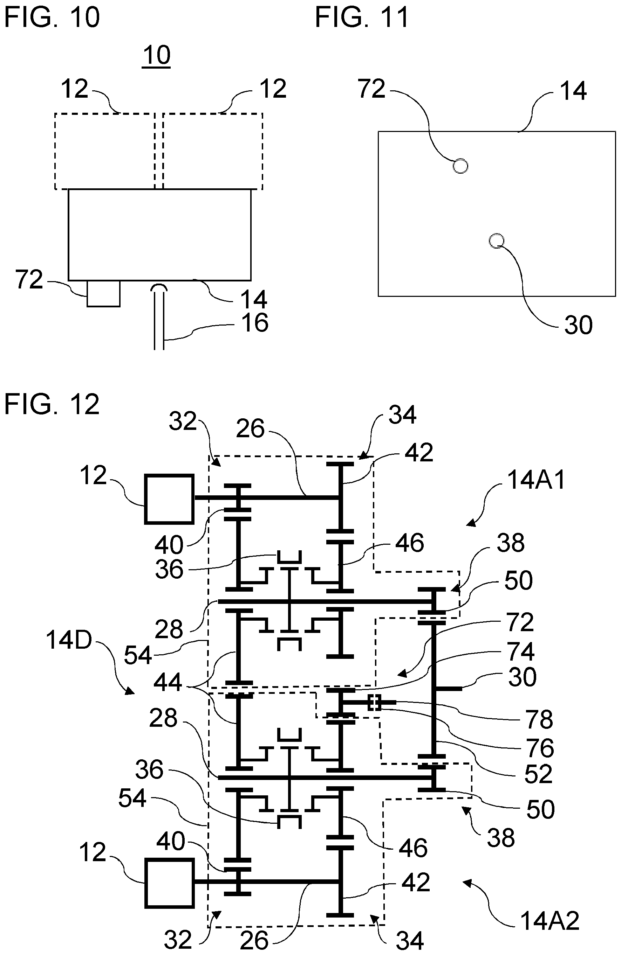

Nachfolgend ist unter Bezugnahme auf die Figuren 10 bis 16 ein Ausführungsbeispiel beschrieben, bei dem ein Getriebe einen Nebenabtrieb aufweist.

Die Figur 10 zeigt einen Antriebsstrang 10, der zwei, vorzugsweise elektrische, Antriebseinheiten 12 aufweist und ein Getriebe 14D aufweist. Das Getriebe 14D weist einen Nebenabtrieb 72 und einen Hauptabtrieb, der trieblich mit der Gelenkwelle 16 verbunden ist.

Die Figur 11 zeigt rein schematisch, dass der Nebenabtrieb 72 und der Hauptabtrieb in Form der Ausgangswelle 30 in einer Höhenrichtung und einer Breitenrichtung voneinander beabstandet sein können. Zusätzlich oder alternativ können der Nebenabtrieb 72 und die Ausgangswelle 30 auch in einer Längenrichtung voneinander beabstandet sein.

Die Figur 12 zeigt das Getriebe 14D, das mit den beiden Antriebseinheiten 12 trieblich verbunden ist.

Das Getriebe 14D kann beispielsweise wie das Getriebe 14B von Figur 4 aufgebaut sein. Das zweite Teilgetriebe 14A2 kann den Nebenabtrieb 72 aufweisen. Das Grundmodul 54 des zweiten Teilgetriebes 14A2 kann um den Nebenabtrieb 72 ergänzt sein.

Es ist beispielsweise auch möglich, dass der Nebenabtrieb 72 in dem Getriebe 14A von Figur 2 ergänzt wird, z. B. am Abtriebsrad 46, oder in dem Getriebe 14C von Figur 5 ergänzt wird, z. B. am Abtriebsrad 46'.

Der Nebenabtrieb 72 kann ein (Neben-)Abtriebsrad bzw. Eingangsrad 74, eine Schalteinheit 76 und eine (Neben-)Abtriebswelle (Ausgangswelle) 78 als Ausgabeelement aufweisen. An der Abtriebswelle 78 können je nach Anforderung unterschiedliche Komponenten angeschlossen werden, z. B. Arbeitswerkzeuge, Wasserpumpen für Feuerwehrfahrzeuge oder Hydraulikpumpen für hydraulisch angetriebene Komponenten.

Das Eingangsrad 74 ist so angeordnet, dass es mit dem Abtriebsrad 46 des zweiten Teilgetriebes 14A2 kämmt. Die Schalteinheit 76 ist dazu ausgebildet, wahlweise das Eingangsrad 74 trieblich mit der Abtriebswelle 78 zu verbinden oder nicht zu verbinden. Die Schalteinheit 76 kann beispielsweise als formschlüssige oder reibschlüssige Schalteinheit, vorzugsweise Kupplung, ausgeführt sein.

Sofern die mit dem zweiten Teilgetriebe 14A2 verbundene Antriebseinheit 12 aktiviert ist, wird das Eingangsrad 74 des Nebenabtriebs 72 gedreht, unabhängig von einer Schaltstellung der Schalteinheit 36 des zweiten Teilgetriebes 14A2. Der Nebenabtrieb 72 wird von der Antriebseinheit 12 des zweiten Teilgetriebes 14A2 angetrieben. Eine Stellung der Schalteinheit 76 bestimmt, ob die Abtriebswelle 78 des Nebenabtriebs 72 gedreht wird oder nicht.

Das Getriebe 14D ermöglicht in unterschiedlichen Schaltstellungen der Schalteinheiten 36 und 72, dass eine oder beide Antriebseinheiten 12 die Ausgangswelle 30 antreiben und/oder die Abtriebswelle 78 des Nebenabtriebs 72 antreiben. Insbesondere ermöglicht das Getriebe 14D, das die mit dem ersten Teilgetriebe 14A1 verbundene Antriebseinheit 12 nur die Ausgangswelle 30 antreiben kann (und das Kraftfahrzeug somit fahren) und dass die mit dem zweiten Teilgetriebe 14A2 verbundene Antriebseinheit 12 nur die Abtriebswelle 78 des Nebenabtriebs 72 antreibt.

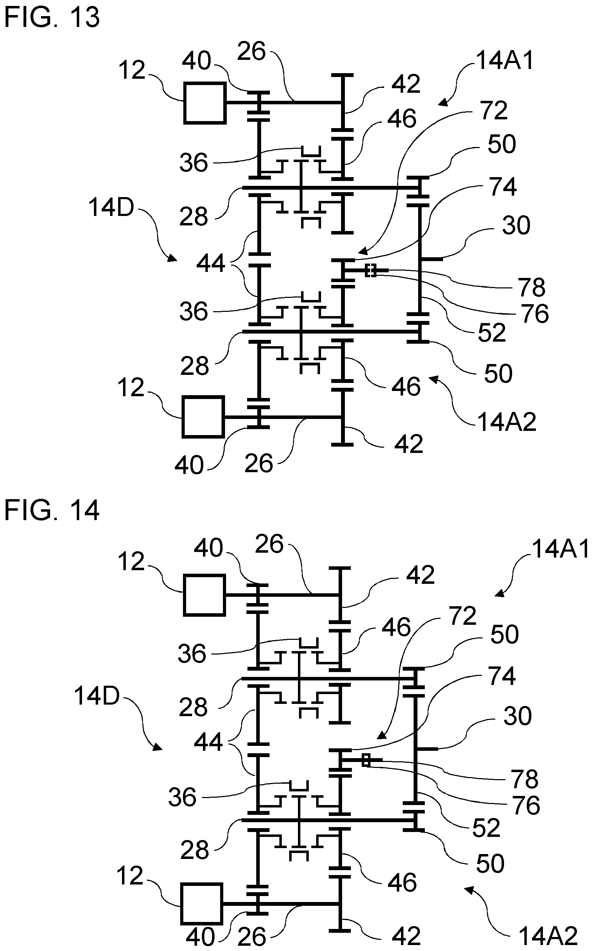

Nachfolgend sind unter Bezugnahme auf die Figuren 13 bis 15 Kombinationen von Schaltstellungen des Getriebes 14D erläutert. Die Figuren 13 bis 15 zeigen jeweils das Getriebe 14D von Figur 12, wobei einige der Bezugszeichen zur besseren Übersicht über die Schaltstellungen der Schalteinheiten 36, 76 nicht dargestellt sind.

In der Figur 13 verbindet die Schalteinheit 36 des ersten Teilgetriebes 14A1 das Abtriebsrad 46 trieblich mit der Zwischenwelle 28 des ersten Teilgetriebes 14A1. Die Schalteinheit 36 des zweiten Teilgetriebes 14A2 verbindet das Abtriebsrad 46 trieblich mit der Zwischenwelle 28 des zweiten Teilgetriebes 14A2. Die Schalteinheit 76 des Nebenabtriebs 72 ist offen. Das Kraftfahrzeug kann somit von beiden Antriebseinheiten 12 gleichzeitig angetrieben werden (Lastfluss je Teilgetriebe 14A1, 14A2 jeweils z. B.: Antriebseinheit 12 zu Eingangswelle 26 zu Antriebsrad 42 zu Abtriebsrad 46 zu Schalteinheit 36 zu Zwischenwelle 28 zu Antriebsrad 50 zu Abtriebsrad 52 zu Ausgangswelle 30)). Die Abtriebswelle 78 des Nebenabtriebs 72 ist nicht angetrieben. Selbiges lässt sich zum Beispiel auch erreichen, wenn die Schalteinheiten 36 jeweils die Antriebsräder 44 trieblich mit der Zwischenwelle 28 des jeweiligen Teilgetriebes 14A1, 14A2 verbinden.

In der Figur 14 verbindet die Schalteinheit 36 des ersten Teilgetriebes 14A1 das Abtriebsrad 46 trieblich mit der Zwischenwelle 28 des ersten Teilgetriebes 14A1. Die Schalteinheit 36 des ersten Teilgetriebes 14A1 kann auch das Antriebsrad 44 mit der Zwischenwelle 28 trieblich verbinden. Die Schalteinheit 36 des zweiten Teilgetriebes 14A2 ist in einer Neutralstellung. Die Schalteinheit 76 des Nebenabtriebs 72 ist geschlossen. Das Kraftfahrzeug kann somit von der mit dem ersten Teilgetriebe 14A1 verbundenen Antriebseinheit 12 angetrieben werden (Lastfluss im ersten Teilgetriebe 14A1 z. B.: Antriebseinheit 12 zu Eingangswelle 26 zu Antriebsrad 42 zu Abtriebsrad 46 zu Schalteinheit 36 zu Zwischenwelle 28 zu Antriebsrad 50 zu Abtriebsrad 52 zu Ausgangswelle 30). Gleichzeitig kann die Abtriebswelle 78 des Nebenabtriebs 72 von der mit dem zweiten Teilgetriebe 14A2 verbundenen Antriebseinheit 12 angetrieben werden (Lastfluss im zweiten Teilgetriebe 14A2 z. B.: Antriebseinheit 12 zu Eingangswelle 26 zu Antriebsrad 42 zu Abtriebsrad 46 zu Eingangsrad 74 zu Schalteinheit 76 zu Abtriebswelle 78).

Das zweite Teilgetriebe 14A2 und die damit verbundene Antriebseinheit 12 arbeiten unabhängig von dem ersten Teilgetriebe 14A1 und der damit verbundenen Antriebseinheit 12. Somit kann die Leistungsanforderungen des Nebenabtriebs 72 drehmoment- und drehzahlspezifisch erfüllt werden.

Beispielsweise kann von der in Figur 13 gezeigten Schaltstellung zu der in der Figur 14 gezeigten Schaltstellung umgeschaltet werden, wenn der Nebenabtrieb 72 zugeschaltet werden soll. Dazu schaltet die Schalteinheit 36 des zweiten Teilgetriebes 14A2 in die Neutralstellung. Die Eingangswelle 26 des zweiten Teilgetriebes 14A2 wird z. B. von der verbundenen Antriebseinheit 12 abgebremst, sodass die Schalteinheit 76 geschlossen werden kann.

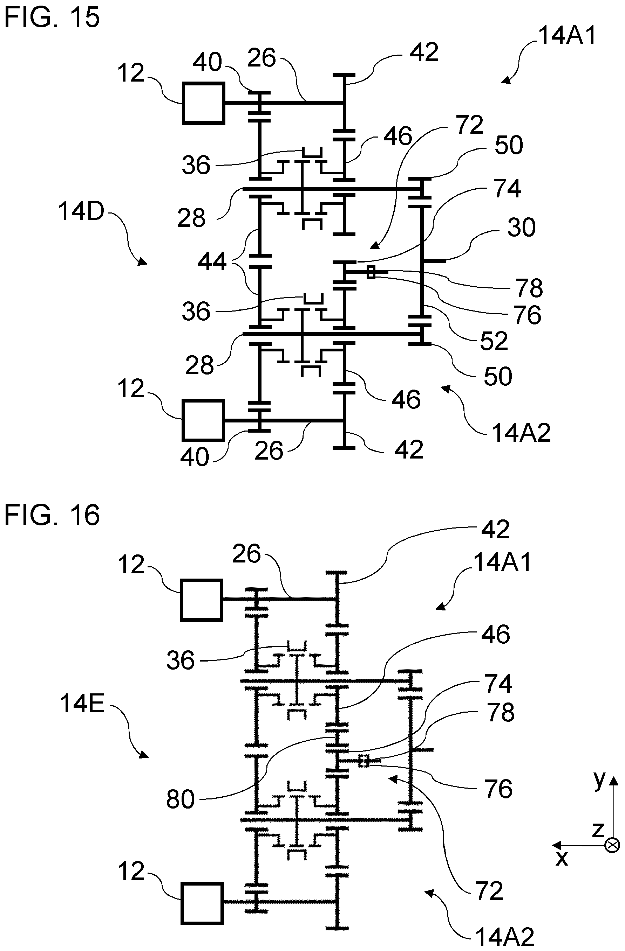

In der Figur 15 verbindet die Schalteinheit 36 des ersten Teilgetriebes 14A1 das Abtriebsrad 46 trieblich mit der Zwischenwelle 28 des ersten Teilgetriebes 14A1. Die Schalteinheit 36 des ersten Teilgetriebes 14A1 kann auch das Antriebsrad 44 mit der Zwischenwelle 28 trieblich verbinden. Die Schalteinheit 36 des zweiten Teilgetriebes 14A2 verbindet das Abtriebsrad 46 trieblich mit der Zwischenwelle 28 des zweiten Teilgetriebes 14A2. Die Schalteinheit 36 des ersten Teilgetriebes 14A1 kann auch das Abtriebsrad 44 mit der Zwischenwelle 28 trieblich verbinden. Die Schalteinheit 76 des Nebenabtriebs 72 ist geschlossen. Das Kraftfahrzeug kann somit von beiden Antriebseinheiten 12 angetrieben werden (Lastfluss je Teilgetriebe 14A1, 14A2 z. B.: Antriebseinheit 12 zu Eingangswelle 26 zu Antriebsrad 42 zu Abtriebsrad 46 zu Schalteinheit 36 zu Zwischenwelle 28 zu Antriebsrad 50 zu Abtriebsrad 52 zu Ausgangswelle 30). Gleichzeitig kann die Abtriebswelle 78 des Nebenabtriebs 72 von der mit dem zweiten Teilgetriebe 14A2 verbundenen Antriebseinheit 12 angetrieben werden (Lastfluss im zweiten Teilgetriebe 14A2 z. B.: Antriebseinheit 12 zu Eingangswelle 26 zu Antriebsrad 42 zu Abtriebsrad 46 zu Eingangsrad 74 zu Schalteinheit 76 zu Abtriebswelle 78). Der Nebenabtrieb 72 kann zusätzlich auch noch von der Antriebseinheit 12, die mit dem ersten Teilgetriebe 14A1 verbunden ist, angetrieben werden.

Die Schaltstellung der Figur 15 kann bspw. verwendet werden, wenn die erforderliche Antriebsleistung zum Antreiben des Kraftfahrzeugs nicht allein durch die mit dem ersten Teilgetriebe 14A1 verbundene Antriebseinheit 12 alleine bereitgestellt werden kann. Die erforderliche Differenzleistung $P_{diff}$ kann über die Antriebseinheit 12, die mit dem zweiten Teilgetriebe 14A2 verbunden ist, bereitgestellt werden. Die Differenzleistung $P_{diff}$ ergibt sich als Differenz aus der der maximalen (Dauer-)Antriebsleistung $P_{max(A2)}$ der Antriebseinheit 12, die mit dem zweiten Teilgetriebe 14A2 verbunden ist, und der zum Antreiben des Nebenabtriebs 72 bereitgestellten Antriebsleistung $P_{PTO}$.

$$P_{diff} = P_{\max(A2)} - P_{PTO}$$

Zum Einnehmen der Schaltstellung kann die Drehzahl der Eingangswelle 26 des zweiten Teilgetriebes 14A2 an die Drehzahl der Eingangswelle 26 des ersten Teilgetriebes 14A2 angeglichen werden, z. B. mittels der Antriebseinheit 12. Die Schalteinheit 36 des zweiten Teilgetriebes 14A2 verbindet das Abtriebsrad 46 trieblich mit der Zwischenwelle 28. An der Ausgangswelle 30 kann das zweite Teilgetriebe 14A2 nun mittels des Antriebsrads 50 die Leistung $P_{diff}$ zuführen. In diesem Fall kann die Leistungsanforderung des Nebenabtriebs 72 nur drehmomentspezifisch erfüllt werden. Diese Betriebsweise kann nur im zweiten Gang möglich sein.

Falls erforderlich kann der Lastfluss zum Nebenabtrieb 72 sowohl im Stillstand als auch während der Fahrt über die Schalteinheit 76 abgekoppelt werden, so dass beide Antriebseinheiten 12 zum Antreiben des Kraftfahrzeugs zur Verfügung stehen. Falls erforderlich kann der Lastfluss zum Nebenabtrieb 72 sowohl im Stillstand als auch während der Fahrt über die Schalteinheit 76 eingekoppelt werden.

Die Figur 16 zeigt ein Getriebe 14E, das eine Weiterbildung zum Getriebe 14D darstellt. Aus Übersichtsgründen sind nur wenige Bezugseichen angegeben.

Das Getriebe 14E weist ein zusätzliches Koppelelement in Form eines (Abtriebs-)Rads 80 auf.

Das Abtriebsrad 80 kann das Abtriebsrad 46 des ersten Teilgetriebes 14A1 mit dem Eingangsrad 74 des Nebenantriebs 72 trieblich verbinden. Das Abtriebsrad 80 ist verschiebbar im Getriebe 14E aufgenommen, um wahlweise eine triebliche Verbindung zwischen dem Abtriebsrad 46 des ersten Teilgetriebes 14A1 und dem Eingangsrad 74 des Nebenantriebs 72 zu schaffen oder zu trennen. Beispielsweise kann ein Zahnradmittelpunkt des Abtriebsrads 80 innerhalb einer y-z-Ebene (bezogen auf das Kraftfahrzeug und wie in Figur 16 angegeben) mechanisch verschoben werden, um wahlweise in Eingriff oder außer Eingriff mit dem Abtriebsrad 46 des ersten Teilgetriebes 14A1 und dem Eingangsrad 74 des Nebenantriebs 72 zu kommen.

Das Getriebe 14E ermöglicht insbesondere für Anwendungen, die hohe Leistungsanforderungen an den Nebenabtrieb 72 stellen, dass optional auch die mit dem ersten Teilgetriebe 14A1 verbundene Antriebseinheit 12 zum Antreiben des Nebenabtrieb 72 trieblich verbunden werden kann (Lastfluss im ersten Teilgetriebe 14A1 z. B.: Antriebseinheit 12 zu Eingangswelle 26 zu Antriebsrad 42 zu Abtriebsrad 46 zu Abtriebsrad 80 zu Eingangsrad 74 zu Schalteinheit 76 zu Abtriebswelle 78). Diese Betriebsweise ist zweckmäßig nur im Stand und bei Neutralstellung beider Schalteinheiten 36 möglich.

**Bezugszeichenliste**

| | |
|---|---|
| 10 | Antriebsstrang |
| 12 | Antriebseinheit |
| 12A | Antriebseinheit |
| 12B | Antriebseinheit |
| 14 | Getriebe |
| 14A | Getriebe |
| 14A1 | Erstes Teilgetriebe |
| 14A2 | Zweites Teilgetriebe |
| 14B | Getriebe |
| 14C | Getriebe |
| 14D | Getriebe |
| 14E | Getriebe |
| 16 | Gelenkwelle |
| 18 | Achsgetriebe |
| 20 | Radwelle |
| 22 | Rad |
| 24 | Traktionsenergiespeicher |
| 26 | Eingangswelle |
| 28 | Zwischenwelle |
| 30 | Ausgangswelle |
| 32 | Erste Übersetzungsstufe |
| 34 | Zweite Übersetzungsstufe |
| 36 | Schalteinheit |
| 38 | Dritte Übersetzungsstufe |
| 40 | Antriebsrad (z. B. Festrad) |
| 42 | Antriebsrad (z. B. Festrad) |
| 44 | Abtriebsrad (z. B. Losrad) |
| 46 | Abtriebsrad (z. B. Losrad) |
| 46' | Abtriebsrad (Festrad) |
| 48 | Steuereinheit |
| 49 | Aktuator |
| 50 | Antriebsrad (z. B. Festrad) |
| 52 | Abtriebsrad (z. B. Festrad) |

| 54 | Grundmodul |
| 56 | Volllastkennlinie |
| 58 | Volllastkennlinie |
| 60 | Antriebsmomentkurve |
| 62 | Antriebsmomentkurve |
| 64 | Resultierende Antriebsmomentkurve |
| 66 | Antriebsmomentkurve |
| 68 | Antriebsmomentkurve |
| 70 | Resultierende Antriebsmomentkurve |
| 72 | Nebenabtrieb |
| 74 | Eingangsrad |
| 76 | Schalteinheit |
| 78 | Abtriebswelle |
| 80 | Abtriebsrad |

**Patentansprüche**

1.  Getriebe (14D) für ein Kraftfahrzeug, vorzugsweise Nutzfahrzeug, aufweisend:

    ein erstes Teilgetriebe (14A1), das zum trieblichen Verbinden mit einer ersten Antriebseinheit (12) ausgebildet ist;
    ein zweites Teilgetriebe (14A2), das zum trieblichen Verbinden mit einer zweiten Antriebseinheit (12) ausgebildet ist und einen Nebenabtrieb (72) aufweist;
    ein Ausgangselement (30), vorzugsweise eine Ausgangswelle, zum Antreiben des Kraftfahrzeugs, wobei das Ausgangselement (30) trieblich mit einem Hauptabtrieb (50) des ersten Teilgetriebes (14A1) und einem Hauptabtrieb des zweiten Teilgetriebes (14A2) verbunden ist; **dadurch gekennzeichnet, dass**

    - das Getriebe (14D) derart schaltbar ist, dass das Ausgangselement (30) über das erste Teilgetriebe (14A1) und das zweite Teilgetriebe (14A2) antreibbar ist und gleichzeitig der Nebenabtrieb (72) nur über das zweite Teilgetriebe (14A1) antreibbar ist; und/oder
    - das Getriebe (14D) derart schaltbar ist, dass das Ausgangselement (30) nicht antreibbar ist und gleichzeitig der Nebenabtrieb (72) über das erste Teilgetriebe (14A1) und das zweite Teilgetriebe (14A2) antreibbar ist; und/oder
    - das Getriebe (14D) derart schaltbar ist, dass das Ausgangselement (30) antreibbar ist und gleichzeitig der Nebenabtrieb (72) über das erste Teilgetriebe (14A1) und das zweite Teilgetriebe (14A2) antreibbar ist.

2.  Getriebe (14D) nach Anspruch 1, wobei:

    das Getriebe (14D) als ein Summiergetriebe aus dem ersten Teilgetriebe (14A1) und dem zweiten Teilgetriebe (14A2) gebildet ist; und/oder
    das erste Teilgetriebe (14A1) und das zweite Teilgetriebe (14A2) parallel geschaltet sind; und/oder
    das erste Teilgetriebe (14A1) und das zweite Teilgetriebe (14A2) im Wesentlichen gleich aufgebaut sind.

3.  Getriebe (14D) nach Anspruch 1 oder Anspruch 2, wobei:

    das Getriebe (14D) als ein Mehrganggetriebe, vorzugsweise Zweiganggetriebe, ausgeführt ist; und/oder
    das erste Teilgetriebe (14A1) als ein Mehrganggetriebe, vorzugsweise Zweiganggetriebe, ausgeführt ist; und/oder
    das zweite Teilgetriebe (14A2) als ein Mehrganggetriebe, vorzugsweise Zweiganggetriebe, ausgeführt ist.

4.  Getriebe (14D) nach einem der vorherigen Ansprüche, wobei der Nebenabtrieb (72) aufweist:

    ein Eingangselement (74), das vorzugsweise als ein Eingangsrad ausgeführt ist und/oder vorzugsweise immer trieblich mit einer Eingangswelle (26) des zweiten Teilgetriebes (14A1) verbunden ist;
    ein Abtriebselement (78), vorzugsweise eine Abtriebswelle; und
    eine Schalteinheit (76), über die das Eingangselement (74) des Nebenabtriebs (72) trieblich mit dem Abtriebselement (78) des Nebenabtriebs (72) verbindbar ist.

5.  Getriebe (14D) nach einem der vorherigen Ansprüche, wobei:

    das zweite Teilgetriebe (14A2) zwei Übersetzungsstufen (32, 34), vorzugsweise Stirnradstufen, und eine Schalteinheit (36) zum Schalten zwischen den zwei Übersetzungsstufen (32, 34) aufweist; und
    der Nebenabtrieb (72) trieblich mit einer der zwei Übersetzungsstufen (32, 34) verbunden ist, vorzugsweise mit einem Abtriebsrad (46) einer der zwei Übersetzungsstufen (32, 34),

    wobei vorzugsweise:
    der Nebenabtrieb (72) unabhängig von einer Schaltstellung der Schalteinheit (36) des zweiten Teilgetriebes (14A2) mit der einen der zwei Übersetzungsstufen (32, 34) des zweiten Teilgetriebes (14A2) trieblich verbunden ist.

6.  Getriebe (14D) nach Anspruch 5, wobei:

die Schalteinheit (36) des zweiten Teilgetriebes (14A2) derart schaltbar ist, dass:

- das Ausgangselement (30) über eine erste der zwei Übersetzungsstufen (32, 34) antreibbar ist; und/oder
- das Ausgangselement (30) über eine zweite der zwei Übersetzungsstufen (32, 34) antreibbar ist; und/oder
- das Ausgangselement (30) über keine der zwei Übersetzungsstufen (32, 34) antreibbar ist.

7. Getriebe (14D) nach einem der vorherigen Ansprüche, wobei:
das erste Teilgetriebe (14A1) zwei Übersetzungsstufen (32, 34), vorzugsweise Stirnradstufen, und eine Schalteinheit (36) zum Schalten zwischen den zwei Übersetzungsstufen (32, 34) aufweist.

8. Getriebe (14D) nach Anspruch 7, wobei:
das Ausgangselement (30) über das erste Teilgetriebe (14A1) und das zweite Teilgetriebe (14A2) antreibbar ist und gleichzeitig der Nebenabtrieb (72) nicht antreibbar ist, wenn:

- die Schalteinheit (36) des ersten Teilgetriebes (14A1) eine der zwei Übersetzungsstufen (32, 34) des ersten Teilgetriebes (14A1) trieblich mit dem Ausgangselement (30) verbindet;
- die Schalteinheit (36) des zweiten Teilgetriebes (14A2) eine der zwei Übersetzungsstufen (32, 34) des zweiten Teilgetriebes (14A2) trieblich mit dem Ausgangselement (30) verbindet; und
- die Schalteinheit (76) des Nebenabtriebs (72) das Eingangselement (74) des Nebenabtriebs (72) trieblich von dem Abtriebselement (78) trennt.

9. Getriebe (14D) nach Anspruch 7 oder Anspruch 8, wobei:
das Ausgangselement (30) nur über das erste Teilgetriebe (14A1) antreibbar ist und gleichzeitig der Nebenabtrieb (72) nur über das zweite Teilgetriebe (14A2) antreibbar ist, wenn:

- die Schalteinheit (36) des ersten Teilgetriebes (14A1) eine der zwei Übersetzungsstufen (32, 34) des ersten Teilgetriebes (14A1) trieblich mit dem Ausgangselement (30) verbindet;
- die Schalteinheit (36) des zweiten Teilgetriebes (14A2) keine der zwei Übersetzungsstufen (32, 34) des zweiten Teilgetriebes (14A2) trieblich mit dem Ausgangselement (30) verbindet; und
- die Schalteinheit (76) des Nebenabtriebs (72) das Eingangselement (74) des Nebenabtriebs (72) trieblich mit dem Abtriebselement (78) verbindet.

10. Getriebe (14D) nach einem der Ansprüche 7 bis 9, wobei:
das Ausgangselement (30) über das erste Teilgetriebe (14A1) und das zweite Teilgetriebe (14A2) antreibbar ist und gleichzeitig der Nebenabtrieb (72) über das zweite Teilgetriebe (14A2) antreibbar ist, wenn:

- die Schalteinheit (36) des ersten Teilgetriebes (14A1) eine der zwei Übersetzungsstufen (32, 34) des ersten Teilgetriebes (14A1) trieblich mit dem Ausgangselement (30) verbindet;
- die Schalteinheit (36) des zweiten Teilgetriebes (14A2) eine der zwei Übersetzungsstufen (32, 34) des zweiten Teilgetriebes (14A2) trieblich mit dem Ausgangselement (30) verbindet; und
- die Schalteinheit (76) des Nebenabtriebs (72) das Eingangselement (74) des Nebenabtriebs (72) trieblich mit dem Abtriebselement (78) verbindet.

11. Getriebe (14E) nach einem der vorherigen Ansprüche, wobei:
das erste Teilgetriebe (14A1) über ein bewegbares, vorzugsweise verschiebbares, Koppelelement (80), vorzugsweise Rad, trieblich mit dem Nebenabtrieb (72) verbindbar ist.

12. Getriebe (14E) nach Anspruch 11 und einem der Ansprüche 5 bis 10 wobei:

das Koppelelement (80) mit einem Eingangselement des Nebenabtriebs (72) trieblich verbindbar ist; und/oder
das Koppelelement (80) unabhängig von einer Schaltstellung der Schalteinheit (36) des ersten Teilgetriebes (14A1) eine der zwei Übersetzungsstufen (32, 34) des ersten Teilgetriebes (14A1) mit dem Nebenabtrieb (72) trieblich verbindet.

13. Kraftfahrzeug, vorzugsweise Nutzfahrzeug, oder Antriebsstrang (10) für ein Kraftfahrzeug, vorzugsweise Nutzfahrzeug, aufweisend:

eine erste, vorzugsweise elektrische, Antriebseinheit (12);
eine zweite, vorzugsweise elektrische, Antriebseinheit (12); und
ein Getriebe (14D) nach einem der vorherigen Ansprüche, wobei die erste Antriebseinheit (12) trieblich mit dem ersten Teilgetriebe (14A1) verbunden ist und die zweite Antriebseinheit (12) trieblich mit dem zweiten Teilgetriebe (14A2) verbunden ist.

**14.** Kraftfahrzeug oder Antriebsstrang nach Anspruch 13, wobei:

zum Zuschalten des Nebenabtriebs (72) die Drehzahl der zweiten Antriebseinheit (12) so weit reduzierbar ist, dass die Schalteinheit (76) des Nebenabtriebs (72) koppelbar ist; und/oder der Nebenabtrieb (72) während der Fahrt und/oder im Stillstand des Kraftfahrzeugs zuschaltbar ist; und/oder der Nebenabtrieb (72) mittels der zweiten Antriebseinheit (12) drehzahlunabhängig und drehmomentunabhängig von der ersten Antriebseinheit (12) antreibbar ist; und/oder der Nebenabtrieb (72) mittels der zweiten Antriebseinheit (12) unabhängig von einer durch die erste Antriebseinheit (12) bewirkten Fahrgeschwindigkeit des Kraftfahrzeugs antreibbar ist; und/oder das Kraftfahrzeug mittels der ersten Antriebseinheit (12) antreibbar ist und der Nebenabtrieb (72) mittels der zweiten Antriebseinheit (12) antreibbar ist.

**Claims**

**1.** Transmission (14D) for a motor vehicle, preferably a commercial vehicle, comprising:

a first sub-transmission (14A1), which is configured to be drivingly connected to a first drive unit (12);
a second sub-transmission (14A2), which is configured to be drivingly connected to a second drive unit (12) and has a power take-off (72);
an output element (30), preferably an output shaft, for driving the motor vehicle, the output element (30) being drivingly connected to a main output (50) of the first sub-transmission (14A1) and a main output (50) of the second sub-transmission (14A2); **characterized in that**:

- the transmission (14D) is shiftable such that the output element (30) is drivable via the first sub-transmission (14A1) and the second sub-transmission (14A2) and at the same time the power take-off (72) is drivable only via the second sub-transmission (14A1); and/or
- the transmission (14D) is shiftable such that the output element (30) is not drivable and at the same time the power take-off (72) is drivable via the first sub-transmission (14A1) and the second sub-transmission (14A2); and/or
- the transmission (14D) is shiftable such that the output element (30) is drivable and at the same time the power take-off (72) is drivable via the first sub-transmission (14A1) and the second sub-transmission (14A2).

**2.** Transmission (14D) according to claim 1, wherein:

the transmission (14D) is formed as a summing transmission from the first sub-transmission (14A1) and the second sub-transmission (14A2); and/or
the first sub-transmission (14A1) and the second sub-transmission (14A2) are connected in parallel; and/or
the first sub-transmission (14A1) and the second sub-transmission (14A2) have essentially the same structure.

**3.** Transmission (14D) according to claim 1 or claim 2, wherein:

the transmission (14D) is configured as a multi-speed transmission, preferably a two-speed transmission; and/or
the first sub-transmission (14A1) is configured as a multi-speed transmission, preferably a two-speed transmission; and/or
the second sub-transmission (14A2) is configured as a multi-speed transmission, preferably a two-speed transmission.

**4.** Transmission (14D) according to one of the preceding claims, wherein the power take-off (72) comprises:

an input element (74), preferably configured as an input gear and/or preferably always drivingly connected to an input shaft (26) of the second sub-transmission (14A1);
an output element (78), preferably an output shaft; and
a shifting unit (76), via which the input element (74) of the power take-off (72) can be drivingly connected to the output element (78) of the power take-off (72).

**5.** Transmission (14D) according to one of the preceding claims, wherein:

the second sub-transmission (14A2) comprises two transmission stages (32, 34), preferably spur gear stages, and a shifting unit (36) for shifting between the two transmission stages (32, 34); and
the power take-off (72) is drivingly connected to one of the two transmission stages (32, 34), preferably to an output gear (46) of one of the two transmission stages (32, 34), wherein preferably:
the power take-off (72) is drivingly connected to the one of the two transmission stages (32, 34) of the second sub-transmission (14A2) independently of a shift position of the shifting unit (36) of the second sub-transmission (14A2).

6. Transmission (14D) according to claim 5, wherein:
the shifting unit (36) of the second sub-transmission (14A2) is shiftable such that:

- the output element (30) is drivable via a first one of the two transmission stages (32, 34); and/or
- the output element (30) is drivable via a second of the two transmission stages (32, 34); and/or
- the output element (30) is not drivable via any of the two transmission stages (32, 34).

7. Transmission (14D) according to one of the preceding claims, wherein:
the first sub-transmission (14A1) comprises two transmission stages (32, 34), preferably spur gear stages, and a shifting unit (36) for shifting between the two transmission stages (32, 34).

8. Transmission (14D) according to claim 7, wherein:
the output element (30) is drivable via the first sub-transmission (14A1) and the second sub-transmission (14A2) and at the same time the power take-off (72) is not drivable when:

- the shifting unit (36) of the first sub-transmission (14A1) connects one of the two transmission stages (32, 34) of the first sub-transmission (14A1) drivably to the output element (30);
- the shifting unit (36) of the second sub-transmission (14A2) drivingly connects one of the two transmission stages (32, 34) of the second sub-transmission (14A2) to the output element (30); and
- the shifting unit (76) of the power take-off (72) disengages the input element (74) of the power take-off (72) drivably from the output element (78).

9. Transmission (14D) according to claim 7 or claim 8, wherein:
the output element (30) is drivable only via the first sub-transmission (14A1) and at the same time the power take-off (72) is drivable only via the second sub-transmission (14A2), when:

- the shifting unit (36) of the first sub-transmission (14A1) drivingly connects one of the two transmission stages (32, 34) of the first sub-transmission (14A1) to the output element (30);
- the shifting unit (36) of the second sub-transmission (14A2) does not drivingly connect any of the two transmission stages (32, 34) of the second sub-transmission (14A2) to the output element (30); and
- the shifting unit (76) of the power take-off (72) drivingly connects the input element (74) of the power take-off (72) to the output element (78).

10. Transmission (14D) according to one of claims 7 to 9, wherein:
the output element (30) is drivable via the first sub-transmission (14A1) and the second sub-transmission (14A2) and at the same time the power take-off (72) is drivable via the second sub-transmission (14A2), when:

- the shifting unit (36) of the first sub-transmission (14A1) drivingly connects one of the two transmission stages (32, 34) of the first sub-transmission (14A1) to the output element (30);
- the shifting unit (36) of the second sub-transmission (14A2) drivingly connects one of the two transmission stages (32, 34) of the second sub-transmission (14A2) to the output element (30); and
- the shifting unit (76) of the power take-off (72) drivingly connects the input element (74) of the power take-off (72) to the output element (78).

11. Transmission (14E) according to one of the preceding claims, wherein:
the first sub-transmission (14A1) is drivingly connectable to the power take-off (72) via a movable, preferably displaceable, coupling element (80), preferably a wheel.

12. Transmission (14E) according to claim 11 and one of claims 5 to 10, wherein:

the coupling element (80) is drivingly connectable to an input element of the power take-off (72); and/or
the coupling element (80) drivingly connects one of the two transmission stages (32, 34) of the first sub-transmission (14A1) to the power take-off (72) independently of a shift position of the shifting unit (36) of the first sub-transmission (14A1).

13. Motor vehicle, preferably commercial vehicle, or drive train (10) for a motor vehicle, preferably commercial vehicle, comprising:

a first, preferably electric, drive unit (12);
a second, preferably electric, drive unit (12); and
a transmission (14D) according to one of the preceding claims, wherein the first drive unit (12) is drivingly connected to the first sub-transmission (14A1) and the second drive unit (12) is drivingly connected to the second sub-transmission (14A2).

14. Motor vehicle or drive train according to claim 13, wherein:

for engaging the power take-off (72), the rotational speed of the second drive unit (12) can be reduced to such an extent that the shifting unit (76) of the power take-off (72) can be coupled; and/or
the power take-off (72) is engageable while the motor vehicle is travelling and/or at a standstill; and/or
the power take-off (72) is drivable by the second drive unit (12) independently of a speed and independently of a torque of the first drive unit (12); and/or
the power take-off (72) is drivable by the second drive unit (12) independently of a travelling speed of the motor vehicle caused by the first drive unit (12); and/or
the motor vehicle is drivable by the first drive unit (12) and the power take-off (72) is drivable by means of the second drive unit (12).

**Revendications**

1. Transmission (14D) pour un véhicule automobile, de préférence un véhicule utilitaire, comprenant :

une première transmission partielle (14A1), qui est configurée pour une liaison motrice avec une première unité d'entraînement (12) ;
une deuxième transmission partielle (14A2), qui est configurée pour une liaison motrice avec une deuxième unité d'entraînement (12) et possède une prise de force (72) ;
un élément de sortie (30), de préférence un arbre de sortie, servant à la propulsion du véhicule automobile, l'élément de sortie (30) étant relié en motricité à une sortie menée principale (50) de la première transmission partielle (14A1) et une sortie menée principale de la deuxième transmission partielle (14A2) ;
**caractérisée en ce que**

- la transmission (14D) peut changer de rapport de telle sorte que l'élément de sortie (30) peut être entraîné par le biais de la première transmission partielle (14A1) et de la deuxième transmission partielle (14A2) et, simultanément, la prise de force (72) peut seulement être entraînée par le biais de la deuxième transmission partielle (14A1) ; et/ou

- la transmission (14D) peut changer de rapport de telle sorte que l'élément de sortie (30) et, simultanément, la prise de force (72) peut être entraînée par le biais de la première transmission partielle (14A1) et de la deuxième transmission partielle (14A2) ; et/ou
- la transmission (14D) peut changer de rapport de telle sorte que l'élément de sortie (30) peut être entraîné et, simultanément, la prise de force (72) peut être entraînée par le biais de la première transmission partielle (14A1) et de la deuxième transmission partielle (14A2).

2. Transmission (14D) selon la revendication 1,

la transmission (14D) étant réalisée sous la forme d'un train épicycloïdal composé de la première transmission partielle (14A1) et de la deuxième transmission partielle (14A2) ; et/ou
la première transmission partielle (14A1) et la deuxième transmission partielle (14A2) étant montées en parallèle ; et/ou
la première transmission partielle (14A1) et la deuxième transmission partielle (14A2) étant de constitution sensiblement identique.

3. Transmission (14D) selon la revendication 1 ou la revendication 2,

la transmission (14D) étant réalisée sous la forme d'une transmission à plusieurs rapports, de préférence une transmission à deux rapports ; et/ou
la première transmission partielle (14A1) étant réalisée sous la forme d'une transmission à plusieurs rapports, de préférence une transmission à deux rapports ; et/ou
la deuxième transmission partielle (14A2) étant réalisée sous la forme d'une transmission à plusieurs rapports, de préférence une transmission à deux rapports.

4. Transmission (14D) selon l'une des revendications précédentes, la prise de force (72) possédant :

un élément d'entrée (74), qui est de préférence réalisé sous la forme d'une tour d'entrée et/ou est de préférence toujours relié en motricité à un arbre d'entrée (26) de la deuxième transmission partielle (14A1) ;
un élément mené (78), de préférence un arbre mené ; et une unité de changement de rapport (76), par le biais de laquelle l'élément d'entrée (74) de la prise de force (72) peut être relié à l'élément mené (78) de la prise de force (72).

**5.** Transmission (14D) selon l'une des revendications précédentes,

la deuxième transmission partielle (14A2) possédant deux rapports de démultiplication (32, 34), de préférence des rapports à pignon droit, et une unité de changement de rapport (36) servant à changer de rapport entre les deux rapports de démultiplication (32, 34) ; et
la prise de force (72) étant reliée en motricité à l'un des deux rapports de démultiplication (32, 34), de préférence à une roue menée (46) de l'un des deux rapports de démultiplication (32, 34),
de préférence :
la prise de force (72) étant reliée en motricité à l'un des deux rapports de démultiplication (32, 34) de la deuxième transmission partielle (14A2) indépendamment de la position de changement de rapport de l'unité de changement de rapport (36) de la deuxième transmission partielle (14A2).

**6.** Transmission (14D) selon la revendication 5, l'unité de changement de rapport (36) de la deuxième transmission partielle (14A2) pouvant changer de rapport de telle sorte que :

- l'élément de sortie (30) peut être entraîné par le biais d'un premier des deux rapports de démultiplication (32, 34) ; et/ou
- l'élément de sortie (30) peut être entraîné par le biais d'un deuxième des deux rapports de démultiplication (32, 34) ; et/ou
- l'élément de sortie (30) ne peut être entraîné par le biais d'aucun des deux rapports de démultiplication (32, 34).

**7.** Transmission (14D) selon l'une des revendications précédentes,
la première transmission partielle (14A1) possède deux rapports de démultiplication (32, 34), de préférence des rapports à pignon droit, et une unité de changement de rapport (36) servant à changer de rapport entre les deux rapports de démultiplication (32, 34).

**8.** Transmission (14D) selon la revendication 7, l'élément de sortie (30) pouvant être entraîné par le biais de la première transmission partielle (14A1) et de la deuxième transmission partielle (14A2) et, simultanément, la prise de force (72) ne pouvant pas être entraînée lorsque :

- l'unité de changement de rapport (36) de la première transmission partielle (14A1) relie en motricité l'un des deux rapports de démultiplication (32, 34) de la première transmission partielle (14A1) à l'élément de sortie (30) ;
- l'unité de changement de rapport (36) de la deuxième transmission partielle (14A2) relie en motricité l'un des deux rapports de démultiplication (32, 34) de la deuxième transmission partielle (14A2) à l'élément de sortie (30) ; et
- l'unité de changement de rapport (76) de la prise de force (72) sépare en motricité l'élément d'entrée (74) de la prise de force (72) de l'élément mené (78).

**9.** Transmission (14D) selon la revendication 7 ou la revendication 8,
l'élément de sortie (30) ne pouvant être entraîné que par le biais de la première transmission partielle (14A1) et, simultanément, la prise de force (72) ne pouvant être entraînée que par le biais de la deuxième transmission partielle (14A2) lorsque :

- l'unité de changement de rapport (36) de la première transmission partielle (14A1) relie en motricité l'un des deux rapports de démultiplication (32, 34) de la première transmission partielle (14A1) à l'élément de sortie (30) ;
- l'unité de changement de rapport (36) de la deuxième transmission partielle (14A2) ne relie en motricité aucun des deux rapports de démultiplication (32, 34) de la deuxième transmission partielle (14A2) à l'élément de sortie (30) ; et
- l'unité de changement de rapport (76) de la prise de force (72) relie en motricité l'élément d'entrée (74) de la prise de force (72) à l'élément mené (78).

**10.** Transmission (14D) selon l'une des revendications 7 à 9,
l'élément de sortie (30) pouvant être entraîné par le biais de la première transmission partielle (14A1) et de la deuxième transmission partielle (14A2) et, simultanément, la prise de force (72) pouvant être entraînée par le biais de la deuxième transmission partielle (14A2) lorsque :

- l'unité de changement de rapport (36) de la première transmission partielle (14A1) relie en motricité l'un des deux rapports de démultiplication (32, 34) de la première transmission partielle (14A1) à l'élément de sortie (30) ;
- l'unité de changement de rapport (36) de la deuxième transmission partielle (14A2) relie en motricité l'un des deux rapports de démultiplication (32, 34) de la deuxième transmission partielle (14A2) à l'élément de sortie (30) ; et
- l'unité de changement de rapport (76) de la prise de force (72) relie en motricité l'élément d'entrée (74) de la prise de force (72) à l'élément mené (78).

**11.** Transmission (14E) selon l'une des revendications précédentes, la première transmission partielle (14A1) pouvant être reliée en motricité à la prise de force (72) par le biais d'un élément de couplage (80), de préférence une roue, mobile, de préférence coulissant.

**12.** Transmission (14E) selon la revendication 11 et l'une des revendications 5 à 10,

l'élément de couplage (80) pouvant être relié en motricité à un élément d'entrée de la prise de force (72) ; et/ou l'élément de couplage (80) reliant l'un des deux rapports de démultiplication (32, 34) de la première transmission partielle (14A1) à la prise de force (72) indépendamment d'une position de l'unité de changement de rapport (36) de la première transmission partielle (14A1).

**13.** Véhicule automobile, de préférence véhicule utilitaire, ou groupe motopropulseur pour un véhicule automobile, de préférence véhicule utilitaire, possédant :

une première unité d'entraînement (12), de préférence électrique ; une deuxième unité d'entraînement (12), de préférence électrique ; et une transmission (14D) selon l'une des revendications précédentes, la première unité d'entraînement (12) étant reliée en motricité à la première transmission partielle (14A1) et la deuxième unité d'entraînement (12) étant reliée en motricité à la deuxième transmission partielle (14A2).

**14.** Véhicule automobile ou groupe motopropulseur selon la revendication 13,

en vue d'engager la prise de force (72), la vitesse de rotation de la deuxième unité d'entraînement (12) pouvant être réduite au point que l'unité de changement de rapport (76) de la prise de force (72) peut être accouplée ; et/ou la prise de force (72) pouvant être engagée pendant le déplacement et/ou à l'arrêt du véhicule automobile ; et/ou la prise de force (72) pouvant être entraînée au moyen de la deuxième unité d'entraînement (12) indépendamment de la vitesse de rotation et indépendamment du couple de la première unité d'entraînement (12) ; et/ou la prise de force (72) pouvant être entraînée au moyen de la deuxième unité d'entraînement (12) indépendamment d'une vitesse de déplacement du véhicule automobile provoquée par la première unité d'entraînement (12) ; et/ou le véhicule automobile peut être entraîné au moyen de la première unité d'entraînement (12) et la prise de force (72) peut être entraînée au moyen de la deuxième unité d'entraînement (12).

FIG. 1

FIG. 2

FIG. 3

FIG. 4

FIG. 5

FIG. 6

FIG. 7

FIG. 8

FIG. 9

FIG. 10

<u>10</u>

12                    12

72

14

16

FIG. 11

72                    14

30

FIG. 12

32    26         34
                       42

12                            14A1

40                    46      38
36                            50

14D            28             72
        54                    74
                              30
        44
        28                    78
                              76
        36                    52
        54                    50

12    40              46      38

              42              14A2

32    26         34

FIG. 13

FIG. 14

FIG. 15

FIG. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19932118 C1
- DE 102013204227 A1
- DE 102016002592 A
- CN 209870082 U